# EUROPEAN PATENT SPECIFICATION

(11) **EP 2 112 056 B1**
(45) Date of publication and mention of the grant of the patent: **21.12.2011**
(21) Application number: 08103643.6
(22) Date of filing: 22.04.2008
(51) Int. Cl.: B62D 55/26, B62D 55/28

(54) **Track shoe for caterpillar vehicle**
Schienenbremsklotz für ein Raupenfahrzeug
Chenille pour véhicule chenillé

(43) Date of publication of application: 28.10.2009
(73) Proprietor: Everpads Co., Ltd., Taichung (TW)
(72) Inventor: Chiang, Chun-Li, Taichung (TW)
(74) Representative: Lang, Christian

(56) References cited:
- EP-A- 1 283 153
- GB-A- 794 074
- JP-A- 9 095 267
- JP-A- 2002 059 877
- US-A- 2 686 697

## Description

### BACKGROUND

### Field of Invention

The present invention relates to a track shoe, and more particularly to the track shoe for a caterpillar vehicle which can facilitate assembly process and reduce manufacture cost.

### Description of Related Art

Conventional tracks are applied to various huge machines, such as excavators, road planers, asphalt pavers etc., for machinery movement, and mostly includes a rubber track shoe to extend the life thereof and to prevent the vehicle from making a large noise from direct between the wheels of the vehicle and the road. Moreover, the rubber track shoe can decrease the frictional resistance and absorb the vibration to drive the machine smoothly.

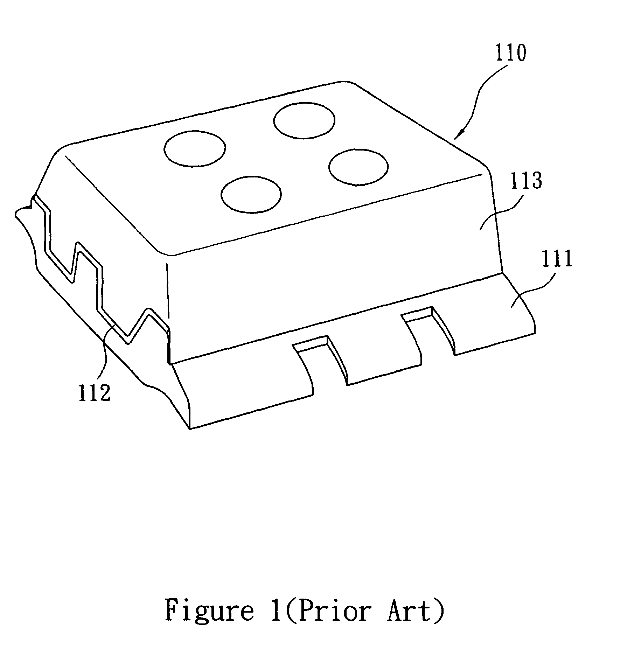

Refer to Figure. 1. Figure. 1 illustrates a perspective view of conventional track shoe for a paver. The track shoe 110 is located on the chain of various machines, and includes a metal plate 111, a support plate 112, and a rubber block 113. The rubber block 113 is combined with the metal plate 111 during the vulcanization molding process, and the support plate 112 located between the rubber block 113 and the metal plate 111 enhances the strength and the durability of the rubber block 113.

However, the rubber block 113 belongs to a consumptive cushion material, and needs to be replaced after predetermined abrasion occurs. The rubber block 113 cannot be demounted from the metal plate 111 such that both the metal plate and the rubber block need to be replaced simultaneously. Therefore, the metal plate 111 is wasted and the material cost is increased.

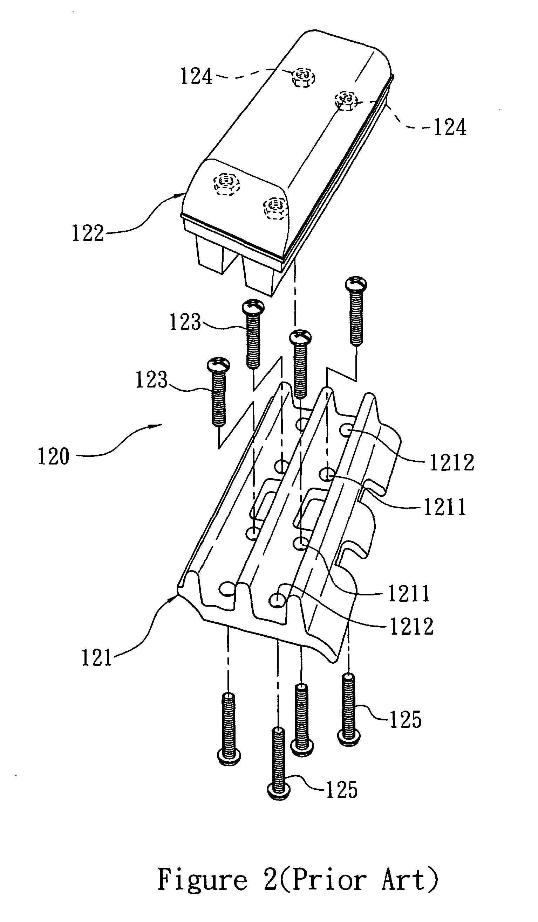

In order to solve this mentioned problem, the rubber block and the metal plate are currently manufactured separately and then combined with each other. Refer to Figure 2. The discrete track shoe 120 includes a metal plate 121, a rubber block 122, multiple bolts 123, and multiple nuts 124.

Regarding the fabrication of the discrete track shoe 120, the bolts 123 are set through the first holes 1211 of the metal plate 121 to secure the metal plate 121 on the chain (not shown). Moreover, the bolts 125 are set through the chain and the second holes 1212 of the metal plate 121. The bolts 125 are secured with the nuts 124 embedded in the rubber block 122 thereby fastening the rubber block 122 on the metal plate 121.

In addition to the abovementioned discrete track shoe 120, there is also another discrete track shoe wherein the nuts are embedded within the rubber block during the vulcanization molding process such that the rubber block can be fastened on the metal plate through the engagement between the nuts and the bolts.

Although the discrete track shoe 120 can solve the rubber block replacement problem of the track shoe 110, the discrete track shoe 120 needs two assembly processes to be fastened on the chain. In this way, the assembly is complicated, and the cost is thereof raised because of the extra fastening members. Beside, the fastening members of the nuts and the bolts must be separated from the track shoe before the rubber block replacement to extend the replacement period and increase human cost.

Further track shoes or tread pads are disclosed in US 2,686,697 and JP 20020598877, any of which disclosures cover the preamble of independent claim 1.

### SUMMARY

It is therefore the main aspect to provide a track shoe of simple structure to facilitate assembly process.

In accordance with the advantageous embodiment of the present invention, the track shoe is fastened on a chain of the caterpillar vehicle, and includes a body and a rubber buffer block, as further comprising the features of independent claim 1.

The body is made of metal, and comprises a first surface, a second surface, a third surface, a fourth surface, a groove, and multiple holes. The first surface is defined adjacent to the chain, and the second surface is defined opposite to the first surface. The groove is defined on the second surface, and through the third surface and the fourth surface. The holes are defined through the first surface and the second surface to communicate with the groove.

The buffer block includes an embedded portion and multiple lock holes corresponding to the holes of the body. The embedded portion is capable of being embedded within the groove of the body. The lock holes are defined through the buffer block to respectively communicate with the holes of the body. Therefore, the buffer block is secured on the body through the embedment between the embedded portion and the groove, and the connected buffer block and the body are then secured on the chain through the bolt connection of the fastening members firmly located in the holes and the lock holes.

In addition, the groove of the body has an S-shaped formation in part, and the embedded portion has a reverse S-shaped formation in part complementary to the S-shaped formation of the groove thereby providing a firm connection.

As a result, the buffer block is embedded within the body through the elasticity thereof such that the assembly or the replacement can be operated more conveniently because of its simple structure. Furthermore, the assembly and replacement process are facilitated and the manufacture and material cost are accordingly reduced.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Figure 1 is a perspective view of a conventional track shoe for a paver;
Figure 2 is an exploded perspective view of another conventional track shoe;
Figure 3 is a perspective view of a track shoe for caterpillar vehicle of the first embodiment in accordance with the present invention;
Figure 4 is a perspective view of a body of the track shoe in Figure 3;
Figure 5 is a sectional view along the section line 5-5 in Figure 3;
Figure 6 is a sectional view showing the assembly between the buffer block and the body; and
Figure 7 is a sectional view of a track shoe for caterpillar vehicle of the second embodiment in accordance with the present invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

While the specification concludes with claims defining the features of the invention that are regarded as novel, it is believed that the invention will be better understood from a consideration of the following description in conjunction with the figures, in which like reference numerals are carried forward.

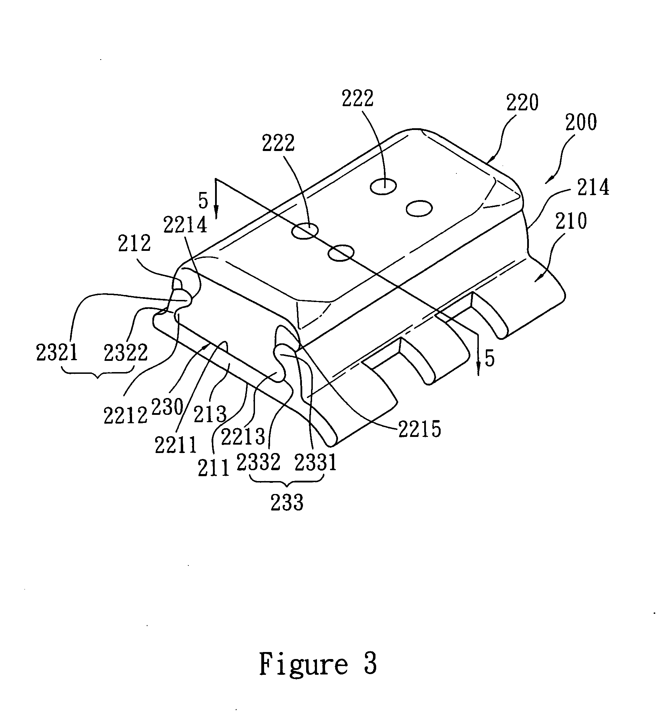

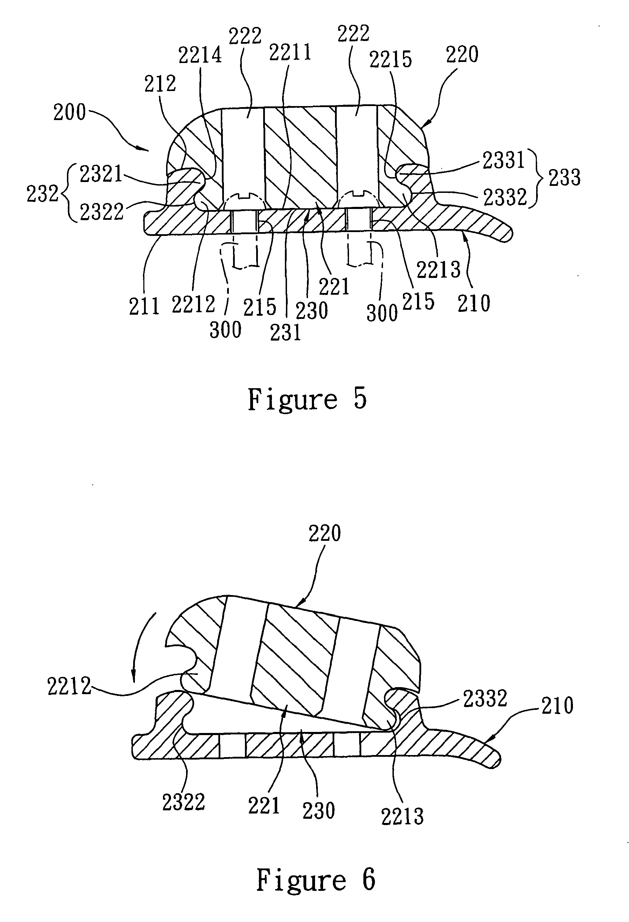

Refer to Figure 3 and Figure 5. Figure 3 illustrates a perspective view of a track shoe for caterpillar vehicle of the first embodiment in accordance with the present invention. Figure 5 illustrates a sectional view along the section line 5-5 in Figure 3. The track shoe 200 is fastened on a chain of the caterpillar vehicle, and includes a body 210 and a buffer block 220.

The body 210 is made of metal, and comprises a first surface 211, a second surface 212, a third surface 213, a fourth surface 214, a groove 230, and multiple holes 215. The first surface 211 is adjacent to the chain, and the second surface 212 is opposite the first surface 211. The groove 230 is on the second surface 212, and through the third surface 213 and the fourth surface 214. The holes 215 penetrate the first surface 211 and the second surface 212 to communicate with the groove 230.

The groove 230 includes a bottom 231, a first sidewall 232, and a second sidewall 233. The first sidewall 232 and the second sidewall 233 respectively include a protrusion 2321 and 2331, and an indentation 2322 and 2332. The indentations 2322 and 2332 are placed between the bottom 231 and the protrusions 2321 and 2331.

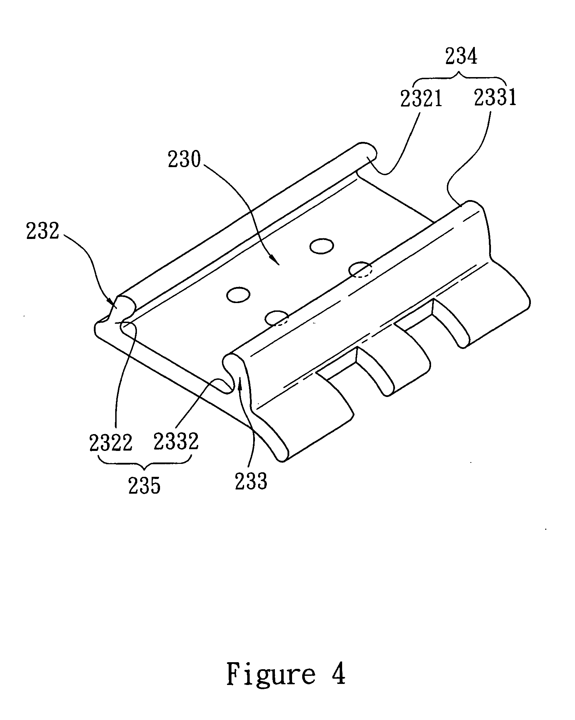

Refer to Figure 4. The protrusion 2321 of the first sidewall 232 faces the protrusion 2331 of the second sidewall 233 to define a narrow gap 234. The indentation 2322 of the first sidewall 232 faces the indentation 2332 of the second sidewall 233 to define a relatively wide gap 235. The protrusion 2321 and the protrusion 2331 of the first sidewall 232 and the second sidewall 233 are curved protrusions. The indentation 2322 and the indentation 2332 of the first sidewall 232 and the second sidewall 233 are curved indentations.

Refer to Figure 3 and Figure 5. The buffer block 220 is made of rubber material, and includes an embedded portion 221 and multiple lock holes 222 corresponding to the holes 215 of the body 210. The embedded portion 221 has a configuration complementary to the groove 230 such that the embedded portion 221 is capable of being embedded within the groove 230. The embedded portion 221 includes a first flank corresponding to the first sidewall 232, a second flank corresponding to the second sidewall 233, and a contact surface 2211 capable of being located against the bottom 231 of the groove 230. The first flank includes a first bulge 2212 and a first notch 2214, and the second flank includes a second bulge 2213 and a second notch 2215. The first bulge 2212 and the first notch 2214 of the first flank are embedded with the indentation 2322 and the protrusion 2321 of the first sidewall 232. The second bulge 2213 and the second notch 2215 of the second flank are embedded with the indentation 2332 and the protrusion 2331 of the second sidewall 233.

The lock holes 222 are defined through the buffer block 220 to respectively communicate with the holes 215 of the body 210. Therefore, the buffer block 220 is secured on the body 210 through not only the embedment between the flanks and the sidewalls but also the bolt connection of the fastening members 300 firmly located through the holes 215 and the lock holes 222.

In addition, the protrusion 2321 (2331) and the indentation 2322 (2332) of the sidewall 232 (233) has an S-shaped section as a view as a whole, and the bulge 2212 (2213) and the notch 2214 (2215) of the flank has a reverse S-shaped section as viewed as a whole. Consequently, the connection between the buffer block 220 and the body 210 is enhanced through the embedment of the complementary S-shaped formations. Moreover, the curved protrusion 2331 of the second sidewall 233 is smaller than the curved protrusion 2321 of the first sidewall 232 for the convenience of the buffer block 220 replacement.

Refer to Figure 6. With regard to the assembly, the discrete buffer block 220 is firstly inclined such that the second bulge 2213 of the embedded portion 221 is directed into the indentation 2332 of the body 210. The buffer block 220 is, then, pressed toward the arrow direction whereby the first bulge 2212 of the buffer block 220 is completely embedded within the first indentation 2322 of the groove 232 through the rubber elasticity. By this connection structure, the outside grits cannot pass through the junction between the body 210 and the buffer block 220.

On the other hand with regard to separation, the buffer block 220 can be demounted by inserting the tool into the junction to lever the buffer block 220 out of the groove 230 of the body 210.

The track shoe 200 is more convenient for the assembly and the separation for the buffer block 220 replacement through the simple embedment between the embedded portion 221 of the buffer block 220 and the grove 230 of the body 210. Therefore, the demountable problem of conventional track shoe is solved thereby facilitating the assembly process.

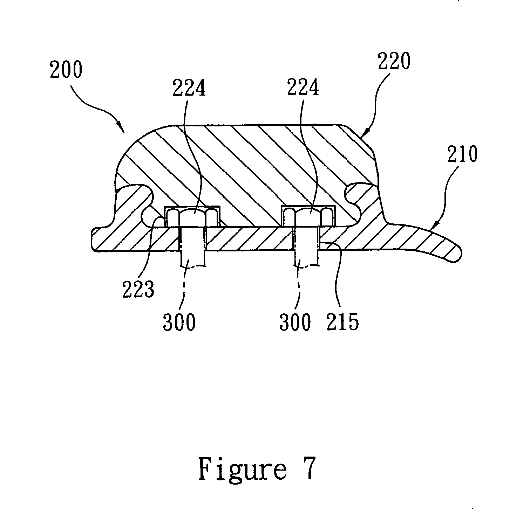

Refer to Figure 7. Figure 7 illustrates a sectional view of a track shoe for caterpillar vehicle of the second embodiment in accordance with the present invention. The difference between the first embodiment and the second embodiment is that the lock holes 223 of the buffer block 220 are blind holes wherein the nuts 224 are pre-set within the blind holes.

As the state structure, the track shoe 200 is secured on the chain by setting the fastening members 300 through the holes 215 and the lock holes 223 to provide a bolt connection between the fastening members 300 and the nuts 224.

As embodied and broadly described herein, the buffer block 220 is embedded within the body 210 through the elasticity thereof such that the assembly or the replacement can be operated more conveniently because of its simple structure. As a result, the assembly and replacement process are facilitated and the manufacture and material cost are accordingly reduced.

Although the present invention has been described in considerable detail with reference to certain preferred embodiments thereof, other embodiments are possible. Therefore, the scope of the appended claims should not be limited to the description of the preferred embodiments contained herein.

## Claims

1. A track shoe (200) for a caterpillar vehicle fastened on a chain of the caterpillar vehicle comprising a body (210) made of metal material and comprising a first surface (211) adjacent to the chain, a second surface (212) opposite to the first surface, a third surface (213), a fourth surface (214) opposite to the third surface, a groove (230) on the second surface and through the third surface and the fourth surface, and multiple holes (215) penetrating through the first surface (211) and the second surface (212) to communicate with the groove (230) wherein the groove comprises a bottom (231), a first sidewall (232), and a second sidewall (233), and comprising a rubber buffer block (220) including an embedded portion (221) and multiple lock holes (222) respectively correspond to the holes of the body, the first sidewall (232) and the second sidewall (233) respectively comprising a protrusion (2321, 2331) and an indentation (2322, 2332) the protrusion of the first sidewall facing to the protrusion of the second sidewall to define a narrow gap, the indentation placed between the bottom (231) and the protrusion, the indentation of the first sidewall facing to the indentation of the second sidewall to define a relatively wide gap, whereby the embedded portion of the buffer block (220) is capable of being embedded within the groove of the body, **characterized in that**:
each of the protrusion (2321, 2331) is a curved protrusion, and each of the indentation (2322, 2332) is a curved indentation.

2. The track shoe of claim 1, wherein the curved protrusion (2331) of the second sidewall (233) is smaller than the curved protrusion (2321) of the first sidewall (232).

3. The track shoe of claim 2, wherein the embedded portion (221) comprises a first flank, a second flank opposite to the first flank, and a contact surface (2211) capable of being located against the bottom (231) of the groove (230) wherein the first flank corresponds to the first sidewall (232), and the second flank corresponds to the second sidewall (233).

4. The track shoe of claim 3, wherein the first flank and the second flank respectively comprise a bulge (2212 and 2213) and a notch (2214 and 2215) wherein the bulge (2212) and the notch (2214) of the first flank are embedded with the indentation (2322) and the protrusion (2321) of the first sidewall (232), and the bulge (2213) and the notch (2215) of the second flank are embedded with the indentation (2332) and the protrusion (2331) of the second sidewall (233).

5. The track shoe of claim 1, wherein the lock holes (222) of the buffer block (220) are defined completely through the buffer block (220).

6. The track shoe of claim 1, wherein the lock holes (223) of the buffer block (220) are blind holes.

7. The track shoe of claim 6, wherein the buffer block (220) comprises multiple nuts (224) set respectively within the blind holes.

8. The track shoe of claim 1, wherein the buffer block (220) is made of rubber material.

## Patentansprüche

1. Kettenschuh (200) für ein Raupenfahrzeug, der an einer Kette des Raupenfahrzeugs befestigt ist und der einen Körper (210) umfasst, der aus metallischen Materialien hergestellt ist und eine erste Oberfläche (211) benachbart zu der Kette, eine zweite Oberfläche (212) gegenüber der ersten Oberfläche, eine dritte Oberfläche (213), eine vierte Oberfläche (214) gegenüber der dritten Oberfläche, eine Nut (230) auf der zweiten Oberfläche und durch die dritte Oberfläche und die vierte Oberfläche hindurch und eine Vielzahl an Löchern (215) umfasst, die durch die erste Oberfläche (211) und die zweite Oberfläche (212) hindurch gehen, um in Verbindung mit der Nut (230) zu stehen, wobei die Nut einen Boden (231), eine erste Seitenwand (232) und eine zweite Seitenwand (233) umfasst, und einen Gummipufferblock (220) umfasst, der einen eingebetteten Bereich (221) und eine Vielzahl von Schließlöchern (222) umfasst, die jeweils den Löchern des Körpers entsprechen, wobei die erste Seitenwand (232) und die zweite Seitenwand (233) jeweils einen Vorsprung (2321, 2331) und eine Vertiefung (2322, 2332) umfassen, wobei der Vorsprung der ersten Seitenwand auf den Vorsprung der zweiten Seitenwand gerichtet ist, um eine schmale Lücke auszubilden, wobei die Vertiefung zwischen dem Boden (231) und dem Vorsprung platziert ist und wobei die Vertiefung der ersten Seitenwand auf die Vertiefung der zweiten Seitenwand ausgerichtet ist, um eine relativ breite Lücke auszubilden, wodurch der eingebettete Bereich des Pufferblocks (220) in der Lage ist, in der Nut des Körpers eingebettet zu werden, **dadurch gekennzeichnet, dass**:
jeder der Vorsprünge (2321, 2331) ein gebogener Vorsprung ist und jede der Vertiefungen (2322, 2332) eine gebogene Vertiefung ist.

2. Kettenschuh nach Anspruch 1, bei welchem der gebogene Vorsprung (2331) der zweiten Seitenwand (233) kleiner ist als der gebogene Vorsprung (2321) der ersten Seitenwand (232) ist.

3. Kettenschuh nach Anspruch 2, bei welchem der eingebettete Bereich (221) eine erste Flanke, eine zweite Flanke gegenüber der ersten Flanke und eine Kontaktfläche (2211) umfasst, die geeignet ist, um an dem Boden (231) der Nut (230) anzuliegen, wobei die erste Flanke der ersten Seitenwand (232) entspricht und wobei die zweite Flanke der zweiten Seitenwand (233) entspricht.

4. Kettenschuh nach Anspruch 3, bei welchem die erste Flanke und die zweite Flanke jeweils eine Auswölbung (2212, 2213) und eine Kerbe (2214, 2215) umfassen, wobei die Auswölbung (2212) und die Kerbe (2214) der ersten Flanke in der Vertiefung (2322) und dem Vorsprung (2321) der ersten Seitenwand (232) eingebettet sind und wobei die Auswölbung (2213) und die Kerbe (2215) der zweiten Flanke in der Vertiefung (2332) und dem Vorsprung (2331) der zweiten Seitenwand (233) eingebettet sind.

5. Kettenschuh nach Anspruch 1, bei welchem die Schließlöcher (222) des Pufferblocks (22) komplett durch den Pufferblock (220) hindurch ausgebildet sind.

6. Kettenschuh nach Anspruch 1, bei welchem die Schließlöcher (223) des Pufferblocks (220) Sacklöcher sind.

7. Kettenschuh nach Anspruch 6, bei welchem der Pufferblock (220) eine Vielzahl an Muttern (224) umfasst, die jeweils innerhalb der Sacklöcher sind.

8. Kettenschuh nach Anspruch 1, bei welchem der Pufferblock (220) aus Gummimaterial besteht.

## Revendications

1. Patin de chenille (200) pour un véhicule à chenille, fixé sur une chaîne du véhicule à chenille, comprenant un corps (210) fabriqué en un matériau métallique et comprenant une première surface (211) adjacente à la chaîne, une seconde surface (212) en face de la première surface, une troisième surface (213), une quatrième surface (214) en face de la troisième surface, une rainure (230) sur la seconde surface et à travers la troisième surface et la quatrième surface et des trous multiples (215) qui pénètrent à travers la première surface (211) et la seconde surface (212) pour communiquer avec la rainure (230), la rainure comprenant un fond (231), une première paroi latérale (232) et une seconde paroi latérale (233) et comprenant un bloc tampon en caoutchouc (220) qui comprend une portion encastrée (221) et des trous de blocage multiples (222) qui correspondent respectivement aux trous du corps, la première paroi latérale (232) et la seconde paroi latérale (233) comprenant respectivement une saillie (2321, 2331) et une entaille (2322, 2322), la saillie de la première paroi latérale étant en face de la saillie de la seconde paroi latérale pour définir un vide étroit, l'entaille placée entre le fond (231) et la saillie, l'entaille de la première paroi latérale étant en face de l'entaille de la seconde paroi latérale pour définir un vide relativement large, la portion encastrée du bloc tampon (220) étant capable d'être encastrée à l'intérieur de la rainure du corps,
**caractérisé en ce**
**que** chacune des saillies (2321, 2331) est une saillie courbée et chacune des entailles (2322, 2332) est une saillie courbée.

2. Patin de chenille selon la revendication 1 dans lequel la saillie courbée (2331) de la seconde paroi latérale (233) est plus petite que la saillie courbée (2321) de la première paroi latérale (232).

3. Patin de chenille selon la revendication 2 dans lequel la portion encastrée (221) comprend un premier flanc, un second flanc en face du premier flanc et une surface de contact (2211) capable d'être située contre le fond (231) de la rainure (230), le premier flanc correspondant à la première paroi latérale (232) et le second flanc correspondant à la seconde paroi latérale (233).

4. Patin de chenille selon la revendication 3 dans lequel le premier flanc et le second flanc comprennent respectivement un renflement (2212 et 2213) et une encoche (2214 et 2215), le renflement (2212) et l'encoche (2214) du premier flanc étant encastrés avec l'entaille (2322) et la saillie (2321) de la première paroi latérale (232) et le renflement (2213) et l'encoche (2215) du second flanc étant encastrés avec l'entaille (2322) et la saillie (2321) de la seconde paroi latérale (233).

5. Patin de chenille selon la revendication 1 dans lequel les trous de blocage (222) du bloc tampon (220) sont définis complètement à travers le bloc tampon (220).

6. Patin de chenille selon la revendication 1 dans lequel les trous de blocage (222) du bloc tampon (220) sont des trous borgnes.

7. Patin de chenille selon la revendication 6 dans lequel le bloc tampon (220) comprend des écrous multiples (224) mis respectivement dans les trous borgnes.

8. Patin de chenille selon la revendication 1 dans lequel le bloc tampon (220) est fabriqué en une matière caoutchoutée.
